## Europäisches Patentamt
## European Patent Office
## Office européen des brevets

(19)

(11) Numéro de publication: **0 018 254**
**B1**

(12) **FASCICULE DE BREVET EUROPEEN**

(45) Date de publication du fascicule du brevet: **13.04.83**

(51) Int. Cl.³: **B 60 T 8/18**

(21) Numéro·de dépôt: **80400426.5**

(22) Date de dépôt: **31.03.80**

---

(54) **Correcteur de freinage double asservi à la charge du véhicule.**

---

(30) Priorité: **09.04.79 IT 2168779**

(43) Date de publication de la demande:
**29.10.80 Bulletin 80/22**

(45) Mention de la délivrance du brevet:
**13.04.83 Bulletin 83/15**

(84) Etats contractants désignés:
**DE FR GB NL SE**

(56) Documents cités:
**US - A - 2 559 850**
**US - A - 2 953 936**
**US - A - 4 101 176**

**Patents Abstracts of Japan, Vol. 3, No. 84, 20 juillet 1979, page 62M66.**

(73) Titulaire: **BENDITALIA S.p.A.**
**Via Cavalli 53/A**
**I-26013 Crema (IT)**

(72) Inventeur: **Cadeddu, Leonardo**
**Via Piacenza 29/D**
**I-26013 Crema (IT)**

(74) Mandataire: **Poidatz, Emmanuel et al,**
**Service Brevets Bendix 44 rue François 1er**
**F-75008 Paris (FR)**

---

Courier Press, Leamington Spa, England.

Correcteur de freinage double asservi à la charge du véhicule

L'invention concerne un correcteur de freinage double pour véhicule automobile, asservi à la charge de cer dernier, du type comprenant un boîtier dans lequel sont percés deux alésages parallèles où coulissent deux pistons de correcteur, lesdits pistons étant soumis à deux forces de rappel égales et conjointement variables en fonction de la charge du véhicule par l'intermédiaire d'éléments opérativement associés au correcteur ainsi qu'aux parties suspendues et non suspendues du véhicule.

En général, dans les correcteurs de ce type, on dispose d'une force unique représentative de l'état de charge du véhicule, que l'on divise en deux forces égales grâce à un système mécanique.

On constate néanmoins que ces systèmes mécaniques sont souvent d'une grande complexité ou bien qu'ils ne réalisent pas une division exacte de la force incidente en deux forces égales appliquées chacune à l'une des pistons du correcteur.

On connaît du brevet US—A—2 953 936 un mécanisme permettant d'assurer une répartition prédéterminée d'une force incidente entre deux pistons d'un maître-cylindre de freinage. Ce mécanisme comprend un plongeur monté dans un alésage du corps du maître-cylindre, parallèle aux alésages des pistons et situé entre ces derniers, un fléau monté oscillant sur un pivot traversant le plongeur perpendiculairement à l'axe de celui-ci et muni et deux bras s'étendant radialement de part et d'autre du plongeur pour engager les extrémités des pistons.

Entre l'organe générateur de la force incidente (en l'espèce une pédale) et le fléau est prévu un dispositif de transmission relativement complexe qui pourrait naturellement être remplacé, à l'exemple du brevet US—A—2 559 850 par une coopération directe de la prédale et du plongeur.

Bien que ces brevets soient consacrés à des maîtres cylindres, leurs enseignements sont transposables à la commande de correcteurs de freinage.

L'objet de la présente invention est un correcteur double, asservi à la charge du véhicule, dans lequel la force de commande incidente est divisée en deux forces égales appliquées aux pistons via un dispositif à plongeur et fléau, et dans lequel la coopération entre le plongeur, le fléau et les pistons est réalisée de manière à la fois simple et compacte, tout en assurant une repartition précise de la force incidente.

A cet effet, l'invention propose un correcteur de freinage double, asservi à la charge du véhicule, comprenant un boîtier percé de deux alésages parallèles dans lesquels coulissent deux pistons de correcteur, un troisième alésage dans ledit boîtier, dont l'axe est parallèle et équidistant des axes desdits pistons, dans lequel coulisse un plongeur prévu pour recevoir une force de commande fonction de la charge du véhicule, et un fléau monté oscillant par rapport à un pivot traversant ledit plongeur perpendiculairement à l'axe de celui-ci et ledit fléau comprenant deux bras s'étendant radialement de part et d'autre dudit plongeur qui sont prévus pour engager chacun l'un desdits pistons, dont il résulte que la force de commande est divisée en deux forces égales appliquées auxdits pistons; ledit fléau a une forme sensiblement plane et s'étend sensiblement perpendiculairement audit plongeur qui traverse ledit fléau, les bras dudit fléau etant en appui libre et direct sur les extrémités desdits pistons.

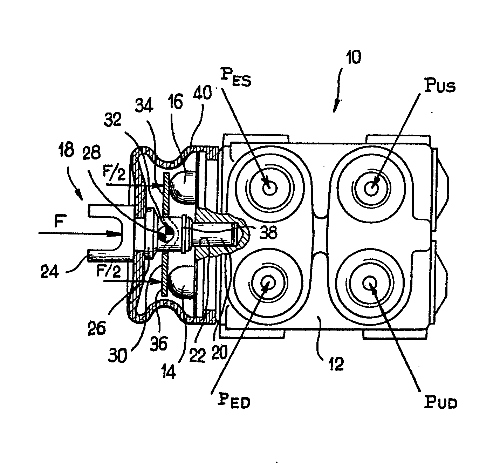

L'invention sera maintenant décrit en se référant au dessin annexé dans lequel la figure unique représente une vue en plan et en coupe partielle d'un correcteur de freinage double selon l'invention.

Si l'on se réfère à la figure, un correcteur de freinage double selon l'invention est désigné par la référence générale 10. Il comporte un corps 12 dans lequel sont percés deux alésages parallèles (non représentés) où coulissent deux pistons 14 et 16. Le correcteur comporte également un plongeur désigné par la référence générale 18. Le plongeur 18 comporte une partie cylindrique droite 20, si l'on considère la figure, reçue en coulisement dans un alésage 22 du corps 12. L'axe du plongeur 18 est parallèle et équidistant des axes des pistons 14 et 16. Le plongeur 18 comprend de plus une partie gauche 24, si l'on considère la figure, sollicitée par des éléments non représentés, par une force telle que F, dirigée vers la droite, fonction de la charge du véhicule. Enfin, le plongeur 18 comporte une partie centrale 26 traversée par un pivot cylindrique 28, l'axe de ce dernier étant perpendiculaire à l'axe du plongeur. Un fléau 30 est monté oscillant autour du pivot 28 de la manière suivante: le fléau a une forme plane allongée et s'étend sensiblement perpendiculairement au plongeur 18, il comporte une ouverture centrale traversée par le plongeur, et deux dépressions demi-cylindriques 32 s'étendant de part et d'autre de l'ouverture dans le sens de la largeur du fléau qui coopérent avec le pivot 28.

Le fléau comporte également deux bras identiques 34 et 36 qui s'étendent radialement de part et d'autre du plongeur 18 dans le sens de la longuur et qui viennent en appui libre et direct sur les extrémités des pistons 14 et 16. Un circlips 38 monté à la périphérie de la partie centrale 26 du plongeur et à l'opposé du pivot 28 constitue une butée qui empêche tout échappement éventuel du fléau 30 par rapport au plongeur. Enfin, un capuchon 40 en caoutchouc ou en matière similaire protège l'ensemble du mécanisme contre l'introduction de projections abrasives ou corrosives.

On aura compris, à la lecture de ce qui précède, que le guidage du plongeur 18 grâce à l'alésage 22 ménagé dans le corps 12 du correcteur lui-même, permet de diviser de manière à la fois simple et précise la force F appliquée au plongeur 18 en deux forces égales F/2, appliquées aux pistons 14 et 16. Il en résulte que les deux parties du correcteur respectivement associées aux pistons 14 et 16 auront un fonctionnement identique et, notamment, un même point de coupure.

Ceci sera particulièrement intéressant lorsque le correcteur sera associé à un circuit de freinage en X, dans lequel l'une des parties du correcteur reçoit une pression PES provenant de l'une des chambres du maître-cylindre et transmet une pression PUS au frein arrière gauche du véhicule et l'autre partie du correcteur reçoit une pression PED provenant de l'autre chambre du maître-cylindre et transmet une pression PUD au frein arrière droit du véhicule.

## Revendications

1. Correcteur de freinage double, asservi à la charge du véhicule, comprenant un boîtier (12) percé de deux alésages parallèles dans lesquels coulissent deux pistons de correcteur (14, 16), un troisième alésage (22) dans ledit boîtier dont l'axe est parallèle et équidistant des axes desdits pistons (14, 16), dans lequel coulisse un plongeur (18) prévu pour recevoir une force de commande (F) fonction de la charge du véhicule, et un fléau (30) monté oscillant par rapport à un pivot (28) traversant ledit plongeur (18) perpendiculairement à l'axe de celui-ci et ledit fléau (30) comprenant deux bras (34, 36) s'étendant radialement de part et d'autre dudit plongeur (18) qui sont prévus pour engager chacun l'un desdits pistons (14, 16), dont il résulte que la force de commande (F) est divisée en deux forces égales (F/2) appliquées auxdits pistons; ledit fléau (30) a une forme sensiblement plane et s'étend sensiblement perpendiculairement audit plongeur (18) qui traverse ledit fléau les bras (34, 36) dudit fléau etant en appui libre et direct sur les extrémités desdits pistons (14, 16).

2. Correcteur de freinage selon la revendication 1, caractérisé en ce que ledit fléau (30) comporte des dépressions demi-cylindriques (32) destinées à coopérer avec ledit pivot (28) pour permettre audit fléau (30) d'osciller par rapport à ce dernier.

3. Correcteur de freinage selon la revendication 2, caractérisé en ce que ledit fléau (30) comporte une ouverture centrale traversée perpendiculairement par ledit plongeur (18), lesdites dépressions demi-cylindriques (32) s'étendant de part et d'autre de ladite ouverture dans le sens de la largeur dudit fléau (30), lesdits bras (34, 36) du fléau étant constitués par les portions s'étendant dans le sens de sa longueur.

4. Correcteur de freinage selon la revendication 3, caractérisé en ce qu'un circlips (38) est monté à périphérie dudit plongeur (18) pour constituer une butée pour ledit fléau (30), à l'opposé dudit pivot (28).

## Patentansprüche

1. Fahrzeuglastabhängiger Zweikreis-Bremskraftregler mit einem Gehäuse (12), versehen mit zwei parallelen Bohrungen, in denen zwei Reglerkolben (14, 16) gleiten, einer dritten Bohrung (22) im Gehäuse, deren Achse parallel und mit gleichem Abstand zu den Achsen der beiden Reglerkolben (14, 16) verläuft und in der ein Plungerkolben (18) gleitet, der eine lastabhängige Steuerkraft (F) empfängt, und einem Waagebalken (30), der um eine Gelenkachse (28) schwenkbar gelagert ist, die durch den Plungerkolben (18) hindruch senkrecht zur Achse desselben verläuft, und der zwei beidseitig zum Plungerkolben (18) radial verlaufende Arme (34, 36) aufweist, die jeweils an einem der Reglerkolben (14, 16) angreifen, so daß die Steuerkraft (F) in zwei an den Reglerkolben angreifende gleiche Kräfte (F/2) aufgeteilt wird, wobei der Waagebalken (30) eine im wesentlichen ebene Form hat und sich im wesentlichen senkrecht zu dem den Waagebalken durchdringenden Plungerkolben (18) erstreckt, wobei die Arme (34, 36) des Waagebalkens frei und unmittelbar an den Enden der Reglerkolben (14, 16) angreifen.

2. Bremskraftregler nach Anspruch 1, dadurch gekennzeichnet, daß der Waagebalken (30) halbzylindrische Vertiefungen (32) aufweist, die dazu dienen, mit der Gelenkachse (28) zusammenzuwirken, damit der Waagebalken (30) um die letztere schwingen kann.

3. Bremskraftregler nach Anspruch 2, dadurch gekennzeichnet, daß der Waagebalken (30) eine zentrale Öffnung aufweist, die der Plungerkolben (10) senkrecht durchdringt, wobei sich die halbzylindrischen Vertiefungen (32) beidseitig zu dieser Öffnung in Richtung der Breite des Waagebalkens (30) erstrecken, wobei die Arme (34, 36) des Waagebalkens von den sich in Richtung seiner länge erstreckenden Abschnitten gebildet werden.

4. Bremskraftregler nach Anspruch 3, dadurch gekennzeichnet, daß am Umfang des Plungerkolbens (18) ein Sicherungsring (38) angebracht ist, der einen Anschlag für den Waagebalken (30) gegenüber der Gelenkachse (28) bildet.

## Claims

1. A dual circuit vehicle load-responsive brake regulator comprising a casing (12) provided with two parallel bores slidingly receiving two regulator pistons (14, 16), a third bore (22) in said casing having an axis parallel and equidistant to the axes of said pistons (14, 16) and slidingly receiving a plunger (18), which plunger is provided to receive a control force (F) responsive to the vehicle load, and a balance beam (30) mounted to oscillate relative to a pivot (28) traversing said plunger (18) perpendicularly to the axis thereof, said balance beam (30) comprising two arms (34, 36) extending radially on both sides of said plunger (18) and provided to engage each of said pistons (14, 16) resulting in the control force (F) being divided into two equal forces (F/2) applied to said pistons, said balance beam (30) being of a substantially planar form and extending substantially perpendicularly to said plunger (18) which traverses said balance beam, the arms (34, 36) of said balance beam being in free and direct engagement with the ends of said pistons (14, 16).

2. The brake regulator of claim 1, characterized in that said balance beam (30) comprises half-cylindric depressions (32) provided to co-operate with said pivot (28) for permitting said balance beam (30) to oscillate relative to the latter.

3. The brake regulator of claim 2, characterized in that said balance beam (30) comprises a central orifice which is traversed perpendicularly by said plunger (18), said half-cylindric depressions (32) extending on both sides of said orifice in the sense of the width of said balance beam (30), said arms (34, 36) of the balance beam being constituted by the portions extending in the sense of its length.

4. The brake regulator of claim 3, characterized in that a circlips (38) is mounted at the periphery of said plunger (18) for constituting an abutment for said balance beam (30) opposite to said pivot (28).